# EUROPÄISCHE PATENTANMELDUNG

(11) **EP 4 663 337 A1**
(43) Veröffentlichungstag der Anmeldung: **17.12.2025**
(21) Anmeldenummer: 24181898.8
(22) Anmeldetag: 13.06.2024
(51) Int. Cl.: B23K 35/30, B23K 1/00, C22C 19/05, B23K 35/02, B23P 6/04

(54) **SUPERLEGIERUNGSFÜLLSTOFF, LOTMISCHUNG UND VERFAHREN ZUM LÖTEN EINES BAUTEILS**

(71) Anmelder: MTU Aero Engines AG, 80995 München (DE)
(72) Erfinder: Reker, Dirk Wilhelm, 30855 Langenhagen (DE); Schwalbe, Caspar, 80995 München (DE); Sowa, Roman, 36-002 Jasionka (PL)

(57) **Zusammenfassung**

Die Erfindung betrifft einen Superlegierungsfullstoff (18) zur Verwendung als Additiv in einem Lötverfahren, umfassend in Massenprozenten etwa 10,0-15,0 % W, etwa 0,5-3,0 % Mo, etwa 5,0-8,0 % Ta, etwa 5,0-7,0 % Al, etwa 12,0-20,0% Cr, etwa 0,01-4,0 % Co, etwa 0-2,0 % Hf und als Rest Ni sowie unvermeidbare Verunreinigungen. Die Erfindung betrifft weiterhin eine Lotmischung (14) zur Anwendung in einem Verfahren zum Löten eines Bauteils (10) sowie ein Verfahren zum Löten eines Bauteils (10), welches eine Superlegierung als Grundwerkstoff aufweist.

## Beschreibung

Die Erfindung betrifft einen Superlegierungsfüllstoff, eine Lotmischung sowie ein Verfahren zum Löten eines Bauteils.

Für das Löten von Turbinenkomponenten (bspw. Vanes, Shrouds, etc.) werden Lote auf Nickel- und/oder Kobaltbasis im Prozess des Hochtemperaturlötens unter Vakuum verwendet. Anwendungsfelder sind beispielsweise die Reparatur von Rissen, Wandstärkenaufbauten und Geometrieregenerationen wie etwa das Wiederherstellen von Kühlluftbohrungsgeometrien. Schweißverfahren können aufgrund der Heißrissanfälligkeit von Superlegierungen wie etwa ausscheidungsgehärteten Nickelbasis-Superlegierungen nicht angewandt werden.

Die zum Einsatz kommenden Lote weisen in der Regel eine Legierungschemie auf, die ähnlich zum Grundwerkstoff ist (Nickelbasis). Um den Schmelzpunkt der Legierungen zu senken, wird dem Lot das Element Bor (üblicherweise 2,3 - 3,5 Gew.-%) hinzulegiert. Beim Reparaturlöten werden Temperaturen von 1100°C - 1300°C, üblicherweise 1150°C - 1250°C, und Haltezeiten von vielen Stunden (3 - 48 h) gefahren. Bei hohen Temperaturen diffundiert das schmelzpunktsenkende Element aus dem Lot in den Grundwerkstoff, wodurch das Lot an Schmelzpunktsenker verarmt und somit bei konstanter Temperatur erstarren kann. Dieser Teilprozess des Diffusionslötens bzw. Reparaturlötens, die sogenannte "isotherme Erstarrung", führt zu einer sprödphasenfreien Mikrostruktur und verbessert die mechanischen Eigenschaften signifikant. Ein solches Lot und ein entsprechender Reparaturprozess sind beispielsweise in der DE 10 2010 036 630 B4 beschrieben.

Da aber beispielsweise beim Reparaturlöten Risse mit großen Rissflankenabständen und somit großen Lötspaltbreiten gelötet werden, muss zum Verfüllen eines Risses viel Lot aufgetragen werden. Der für den Prozess notwendige Schmelzpunktsenker (Bor) liegt dadurch in einer vergleichsweise großen Stoffmenge vor, weshalb dieser innerhalb wirtschaftlicher Prozesszeiten nicht ausreichend in den Grundwerkstoff diffundieren kann. Wenn der Schmelzpunktsenker im Lot verbleibt, wird die Bildung von unerwünschten Sprödphasen verursacht. Die festigkeitsmindernden Sprödphasen lassen sich nur bei hohen Temperaturen und sehr langen Haltezeiten vermeiden bzw. reduzieren (bspw. 48 - 72 Stunden). In Folge dessen sind die Prozesszeiten nicht nur unwirtschaftlich, sondern führen aufgrund der langen Haltezeiten bei hohen Temperaturen zu einer Schädigung des Grundwerkstoffes und damit des Bauteils. Ein weiterer Nachteil an dem gegenwärtigen Verfahren ist die Tatsache, dass der Schmelzpunktsenker nach einer erstmaligen Reparatur in den Grundwerkstoff diffundiert ist. Im Fall einer zweiten Reparatur ist der Grundwerkstoff schon mit dem Schmelzpunktsenker angereichert, sodass kein Konzentrationsgefälle mehr vorliegt. Bei der zweiten Temperatur kann der Schmelzpunktsenker somit nicht mehr von dem Lot in den Grundwerkstoff diffundieren.

Im Reparaturlöten wird dem Lot daher zur Sprödphasenreduktion ein Additiv hinzugemischt, das als Füllstoff und Diffusionssenke fungiert. Konventionelle Additive im Reparaturlöten sind beispielsweise Rene 80 oder MARM247. Die Geschwindigkeit der Diffusionsvorgänge ist aber aufgrund der geringen Löslichkeit des Schmelzpunktsenkers (Bor) im Additiv (Nickelbasis) limitiert. Andere Legierungselemente können die Löslichkeit von Bor in Nickel nicht steigern und die Diffusion des Schmelzpunktsenkers in das Additiv ist dadurch gehemmt. Somit verbessert das Additiv durchaus die Eigenschaften der Lötung, jedoch verbleiben unerwünschte Sprödphasen im Lot. Mit anderen Worten stellt sich aufgrund der limitierten Haltezeiten bei hohen Temperaturen und großer Lötspaltbreiten im Reparaturlöten keine vollständige, isotherme Erstarrung des Lotes ein, die aber für ein sprödphasenfreies Lötgefüge erforderlich wäre. Die mechanischen Eigenschaften von aktuellen Reparaturlötungen sind somit nach wie vor beschränkt. Die geringen mechanischen Eigenschaften limitieren zudem den Reparaturumfang. Gleiches gilt für andere Lötverfahren.

Aufgabe der vorliegenden Erfindung ist es, die Reproduzierbarkeit beim Löten zu verbessern und die Ausbildung von Sprödphasen zuverlässig zu vermeiden.

Die Aufgabe wird erfindungsgemäß durch einen Superlegierungsfüllstoff gemäß Anspruch 1 zur Verwendung als Additiv in einem Lötverfahren, durch eine Lotmischung gemäß Anspruch 6 sowie durch ein Verfahren gemäß Anspruch 9 zum Löten eines Bauteils gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft einen Superlegierungsfüllstoff zur Verwendung als Additiv in einem Lötverfahren, umfassend in Massenprozenten etwa 10,0-15,0 % W, etwa 0,5-3,0 % Mo, etwa 5,0-8,0 % Ta, etwa 5,0-7,0 % Al, etwa 12,0-20,0 % Cr, etwa 0,01-4,0 % Co, etwa 0-2,0 % Hf und als Rest Ni sowie unvermeidbare Verunreinigungen. Mit anderen Worten ist erfindungsgemäß ein Superlegierungsfüllstoff vorgesehen, der zur Verbesserung der mechanischen Eigenschaften eines gelöteten Bauteils als Additiv dem Lot hinzugemischt wird. Das Additiv ist eine hochschmelzende Komponente, die in ihrer Zusammensetzung vorzugsweise identisch oder ähnlich zur Chemie des Grundwerkstoffs des zu lötenden Bauteils ist. Das Bauteil besteht also vorzugsweise aus einer Nickelbasislegierung, wobei aber auch Cobaltbasislegierungen vorgesehen sein können. Der als Additiv dem Lot zugemischte Superlegierungsfüllstoff fungiert als im Lot verteilte Diffusionssenke, in die das Bor des Lots diffundieren kann, um eine isotherme Erstarrung zu ermöglichen. Dadurch kann der Teilprozess "isotherme Erstarrung" beim Diffusionslöten auch auf das Löten von Rissen mit großen Spaltbreiten übertragen werden. Analog können auch andere, gegebenenfalls großflächige Lötverfahren problemlos durchgeführt werden. Generell umfasst der Superlegierungsfüllstoff folgende Elemente, wobei Prozentangaben im Rahmen der vorliegenden Offenbarung grundsätzlich als Massenprozente zu verstehen sind, sofern nichts anderes angegeben ist: 10,0 %, 10,1 %, 10,2 %, 10,3 %, 10,4 %, 10,5 %, 10,6 %, 10,7 %, 10,8 %, 10,9 %, 11,0 %, 11,1 %, 11,2 %, 11,3 %, 11,4 %, 11,5 %, 11,6 %, 11,7 %, 11,8 %, 11,9 %, 12,0 %, 12,1 %, 12,2 %, 12,3 %, 12,4 %, 12,5 %, 12,6 %, 12,7 %, 12,8 %, 12,9 %, 13,0 %, 13,1 %, 13,2 %, 13,3 %, 13,4 %, 13,5 %, 13,6 %, 13,7 %, 13,8 %, 13,9 %, 14,0 %, 14,1 %, 14,2 %, 14,3 %, 14,4 %, 14,5 %, 14,6 %, 14,7 %, 14,8 %, 14,9 % oder 15,0 % W, etwa 0,5 %, 0,6 %, 0,7 %, 0,8 %, 0,9 %, 10 %, 1,1 %, 1,2 %, 1,3 %, 1,4 %, 1,5 %, 1,6 %, 1,7 %, 1,8 %, 1,9 %, 2,0 %, 2,1 %, 2,2 %, 2,3 %, 2,4 %, 2,5 %, 2,6 %, 2,7 %, 2,8 %, 2,9 % oder 3,0 % Mo, etwa 5,0 %, 5,1 %, 5,2 %, 5,3 %, 5,4 %, 5,5 %, 5,6 %, 5,7 %, 5,8 %, 5,9 %, 6,0 %, 6,1 %, 6,2 %, 6,3 %, 6,4 %, 6,5 %, 6,6 %, 6,7 %, 6,8 %, 6,9 %, 7,0 %, 7,1 %, 7,2 %, 7,3 %, 7,4 %, 7,5 %, 7,6 %, 7,7 %, 7,8 %, 7,9 % oder 8,0 % Ta, etwa 5,0 %, 5,1 %, 5,2 %, 5,3 %, 5,4 %, 5,5 %, 5,6 %, 5,7 %, 5,8 %, 5,9 %, 6,0 %, 6,1 %, 6,2 %, 6,3 %, 6,4 %, 6,5 %, 6,6 %, 6,7 %, 6,8 %, 6,9 % oder 7,0 % Al, etwa 12,0 %, 12,1 %, 12,2 %, 12,3 %, 12,4 %, 12,5 %, 12,6 %, 12,7 %, 12,8 %, 12,9 %, 13,0 %, 13,1 %, 13,2 %, 13,3 %, 13,4 %, 13,5 %, 13,6 %, 13,7 %, 13,8 %, 13,9 %, 14,0 %, 14,1 %, 14,2 %, 14,3 %, 14,4 %, 14,5 %, 14,6 %, 14,7 %, 14,8 %, 14,9 %, 15,0 %, 15,1 %, 15,2 %, 15,3 %, 15,4 %, 15,5 %, 15,6 %, 15,7 %, 15,8 %, 15,9 %, 16,0 %, 16,1 %, 16,2 %, 16,3 %, 16,4 %, 16,5 %, 16,6 %, 16,7 %, 16,8 %, 16,9 %, 17,0 %, 17,1 %, 17,2 %, 17,3 %, 17,4 %, 17,5 %, 17,6 %, 17,7 %, 17,8 %, 17,9 %, 18,0 %, 18,1 %, 18,2 %, 18,3 %, 18,4 %, 18,5 %, 18,6 %, 18,7 %, 18,8 %, 18,9 %, 19,0 %, 19,1 %, 19,2 %, 19,3 %, 19,4 %, 19,5 %, 19,6 %, 19,7 %, 19,8 %, 19,9 % oder 20,0 % Cr, etwa 0,01 %, 0,02 %, 0,03 %, 0,04 %, 0,05 %, 0,06 %, 0,07 %, 0,08 %, 0,09 %, 0,1 %, 0,2 %, 0,3 %, 0,4 %, 0,5 %, 0,6 %, 0,7 %, 0,8 %, 0,9 %, 1,0 %, 1,1 %, 1,2 %, 1,3 %, 1,4 %, 1,5 %, 1,6 %, 1,7 %, 1,8 %, 1,9 %, 2,0 %, 2,1 %, 2,2 %, 2,3 %, 2,4 %, 2,5 %, 2,6 %, 2,7 %, 2,8 %, 2,9 %, 3,0 %, 3,1 %, 3,2 %, 3,3 %, 3,4 %, 3,5 %, 3,6 %, 3,7 %, 3,8 %, 3,9 % oder 4,0 % Co, 0,00 % (d. h. frei von Hf), 0,01 %, 0,02 %, 0,03 %, 0,04 %, 0,05 %, 0,06 %, 0,07 %, 0,08 %, 0,09 %, 0,10 %, 0,1 %, 0,2 %, 0,3 %, 0,4 %, 0,5 %, 0,6 %, 0,7 %, 0,8 %, 0,9 %, 1,0 %, 1,1 %, 1,2 %, 1,3 %, 1,4 %, 1,5 %, 1,6 %, 1,7 %, 1,8 %, 1,9 % oder 2,0% Hf und als Rest Ni bis 100% erreicht sind. In einfachster Ausgestaltung der Erfindung besteht der Superlegierungsfüllstoff ausschließlich aus den genannten Elementen. Unter unvermeidbaren Verunreinigungen sind in fachüblicher Weise andere Elemente zu verstehen, die zwar unerwünscht sind, jedoch aus chemischen und wirtschaftlichen Gründen nicht komplett entfernt werden (können), sondern in geringen Mengen toleriert werden (müssen), solange sie die Legierungseigenschaften und das Verhalten des Superlegierungsfüllstoffs nicht wesentlich beeinträchtigen oder verändern. Nach dem Aufschmelzen des Lotes kann der Schmelzpunktsenker (Bor) aus dem Lot in den als Additiv dienenden Superlegierungsfüllstoff diffundieren. Durch die Steigerung des Aufnahmevermögens von Bor im Additiv kann der Lotschmelze damit das Bor lokal über Diffusionsvorgänge entzogen werden. Die Mikrostruktur wird durch die ausgelöste isotherme Erstarrung innerhalb des Lötzyklusses verbessert. Das Aufnahmevermögen für Bor kann dadurch signifikant gesteigert werden. Die Steigerung des Aufnahmevermögens für Bor im Additiv ist nicht durch eine Löslichkeitssteigerung bewirkt, sondern wird durch eine in situ Sekundärphasenbildung (in situ Boridbildung) hervorgerufen. In der Chemie des Additivs sind daher insbesondere Legierungselemente vorgesehen und hinsichtlich ihres Gewichtsanteils so angepasst, dass die Bildung von borhaltigen Phasen (Boride) begünstigt wird. Mikrostrukturelle Merkmale von konventionellen Superlegierungen wurden in der Legierungsentwicklung zudem berücksichtigt, wodurch das Additiv eine gamma-strich (y') Härtung aufweist.

In einer vorteilhaften Ausgestaltung der Erfindung ist vorgesehen, dass der Superlegierungsfüllstoff einzeln maximal 0,05 Gew.-%, in Summe maximal 0,15 Gew.-% unvermeidbare Verunreinigungen enthält. Hierdurch können eine hohe und gleichbleibende Qualität und Verarbeitbarkeit sichergestellt werden. Die genannten Grenzen für die unvermeidbaren Verunreinigungen sind für alle Ausführungsformen des Superlegierungsfüllstoffs bevorzugt.

In weiterer vorteilhafter Ausgestaltung der Erfindung ist vorgesehen, dass der Superlegierungsfüllstoff zumindest im Wesentlichen frei von einem oder mehreren aus der Gruppe Y, Ti, Nb, Fe, C, Re, Si, Zr und B ist. Vorzugsweise ist der Superlegierungsfüllstoff frei von allen genannten Elementen, insbesondere aber frei von Bor, um eine entsprechend zuverlässige Diffusionssenke für Bor aus dem Lot bereitstellen zu können.

In einer bevorzugten Zusammensetzung besteht der Superlegierungsfüllstoff in Massenprozenten aus 1,75 % Co, 13.25 % Cr, 6,0 % Al, 6,75 % Ta, 1,75 % Mo, 10,25 % W, 0,1 % Hf und als Rest Ni sowie unvermeidbare Verunreinigungen.

In einer alternativen bevorzugten Zusammensetzung besteht der Superlegierungsfüllstoff aus etwa 0,01-3,0 % Co, 12,5-13,5 % Cr, 5,5-6,0 % Al, 5,0-8,0 % Ta, 1,0-3,0 % Mo, 10,0-11,0 % W, und als Rest Ni sowie unvermeidbare Verunreinigungen. Der Superlegierungsfüllstoff ist in dieser Ausführungsform HF-frei bzw. HF kommt lediglich als Verunreinigung in entsprechend geringen Mengen vor.

Ein zweiter Aspekt der Erfindung betrifft eine Lotmischung zur Anwendung in einem Verfahren zum Löten eines Bauteils, insbesondere eines Flugtriebwerkbauteils, wobei die Lotmischung wenigstens ein Lotpulver auf Nickel- und/oder Cobaltbasis sowie in Massenprozent etwa 20-60 % des Superlegierungsfüllstoffs gemäß dem ersten Erfindungsaspekt als Additiv umfasst. Mit anderen Worten ist erfindungsgemäß eine Lotmischung vorgesehen, die ein oder mehrere Lotpulver auf Nickel- und/oder Cobaltbasis umfasst sowie als Additiv den Superlegierungsfüllstoff gemäß dem ersten Erfindungsaspekt, wobei der Gewichtsanteil des Superlegierungsfüllstoffs an der Gesamtmasse der Lotmischung 20,0 %, 20,1 %, 20,2 %, 20,3 %, 20,4 %, 20,5 %, 20,6 %, 20,7 %, 20,8 %, 20,9 %, 21,0 %, 21,1 %, 21,2 %, 21,3 %, 21,4 %, 21,5 %, 21,6 %, 21,7 %, 21,8 %, 21,9 %, 22,0 %, 22,1 %, 22,2 %, 22,3 %, 22,4 %, 22,5 %, 22,6 %, 22,7 %, 22,8 %, 22,9 %, 23,0 %, 23,1 %, 23,2 %, 23,3 %, 23,4 %, 23,5 %, 23,6 %, 23,7 %, 23,8 %, 23,9 %, 24,0 %, 24,1 %, 24,2 %, 24,3 %, 24,4 %, 24,5 %, 24,6 %, 24,7 %, 24,8 %, 24,9 %, 25,0 %, 25,1 %, 25,2 %, 25,3 %, 25,4 %, 25,5 %, 25,6 %, 25,7 %, 25,8 %, 25,9 %, 26,0 %, 26,1 %, 26,2 %, 26,3 %, 26,4 %, 26,5 %, 26,6 %, 26,7 %, 26,8 %, 26,9 %, 27,0 %, 27,1 %, 27,2 %, 27,3 %, 27,4 %, 27,5 %, 27,6 %, 27,7 %, 27,8 %, 27,9 %, 28,0 %, 28,1 %, 28,2 %, 28,3 %, 28,4 %, 28,5 %, 28,6 %, 28,7 %, 28,8 %, 28,9 %, 29,0 %, 29,1 %, 29,2 %, 29,3 %, 29,4 %, 29,5 %, 29,6 %, 29,7 %, 29,8 %, 29,9 %, 30,0 %, 30,1 %, 30,2 %, 30,3 %, 30,4 %, 30,5 %, 30,6 %, 30,7 %, 30,8 %, 30,9 %, 31,0 %, 31,1 %, 31,2 %, 31,3 %, 31,4 %, 31,5 %, 31,6 %, 31,7 %, 31,8 %, 31,9 %, 32,0 %, 32,1 %, 32,2 %, 32,3 %, 32,4 %, 32,5 %, 32,6 %, 32,7 %, 32,8 %, 32,9 %, 33,0 %, 33,1 %, 33,2 %, 33,3 %, 33,4 %, 33,5 %, 33,6 %, 33,7 %, 33,8 %, 33,9 %, 34,0 %, 34,1 %, 34,2 %, 34,3 %, 34,4 %, 34,5 %, 34,6 %, 34,7 %, 34,8 %, 34,9 %, 35,0 %, 35,1 %, 35,2 %, 35,3 %, 35,4 %, 35,5 %, 35,6 %, 35,7 %, 35,8 %, 35,9 %, 36,0 %, 36,1 %, 36,2 %, 36,3 %, 36,4 %, 36,5 %, 36,6 %, 36,7 %, 36,8 %, 36,9 %, 37,0 %, 37,1 %, 37,2 %, 37,3 %, 37,4 %, 37,5 %, 37,6 %, 37,7 %, 37,8 %, 37,9 %, 38,0 %, 38,1 %, 38,2 %, 38,3 %, 38,4 %, 38,5 %, 38,6 %, 38,7 %, 38,8 %, 38,9 %, 39,0 %, 39,1 %, 39,2 %, 39,3 %, 39,4 %, 39,5 %, 39,6 %, 39,7 %, 39,8 %, 39,9 %, 40,0 %, 40,1 %, 40,2 %, 40,3 %, 40,4 %, 40,5 %, 40,6 %, 40,7 %, 40,8 %, 40,9 %, 41,0 %, 41,1 %, 41,2 %, 41,3 %, 41,4 %, 41,5 %, 41,6 %, 41,7 %, 41,8 %, 41,9 %, 42,0 %, 42,1 %, 42,2 %, 42,3 %, 42,4 %, 42,5 %, 42,6 %, 42,7 %, 42,8 %, 42,9 %, 43,0 %, 43,1 %, 43,2 %, 43,3 %, 43,4 %, 43,5 %, 43,6 %, 43,7 %, 43,8 %, 43,9 %, 44,0 %, 44,1 %, 44,2 %, 44,3 %, 44,4 %, 44,5 %, 44,6 %, 44,7 %, 44,8 %, 44,9 %, 45,0 %, 45,1 %, 45,2 %, 45,3 %, 45,4 %, 45,5 %, 45,6 %, 45,7 %, 45,8 %, 45,9 %, 46,0 %, 46,1 %, 46,2 %, 46,3 %, 46,4 %, 46,5 %, 46,6 %, 46,7 %, 46,8 %, 46,9 %, 47,0 %, 47,1 %, 47,2 %, 47,3 %, 47,4 %, 47,5 %, 47,6 %, 47,7 %, 47,8 %, 47,9 %, 48,0 %, 48,1 %, 48,2 %, 48,3 %, 48,4 %, 48,5 %, 48,6 %, 48,7 %, 48,8 %, 48,9 %, 49,0 %, 49,1 %, 49,2 %, 49,3 %, 49,4 %, 49,5 %, 49,6 %, 49,7 %, 49,8 %, 49,9 %, 50,0 %, 50,1 %, 50,2 %, 50,3 %, 50,4 %, 50,5 %, 50,6 %, 50,7 %, 50,8 %, 50,9 %, 51,0 %, 51,1 %, 51,2 %, 51,3 %, 51,4 %, 51,5 %, 51,6 %, 51,7 %, 51,8 %, 51,9 %, 52,0 %, 52,1 %, 52,2 %, 52,3 %, 52,4 %, 52,5 %, 52,6 %, 52,7 %, 52,8 %, 52,9 %, 53,0 %, 53,1 %, 53,2 %, 53,3 %, 53,4 %, 53,5 %, 53,6 %, 53,7 %, 53,8 %, 53,9 %, 54,0 %, 54,1 %, 54,2 %, 54,3 %, 54,4 %, 54,5 %, 54,6 %, 54,7 %, 54,8 %, 54,9 %, 55,0 %, 55,1 %, 55,2 %, 55,3 %, 55,4 %, 55,5 %, 55,6 %, 55,7 %, 55,8 %, 55,9 %, 56,0 %, 56,1 %, 56,2 %, 56,3 %, 56,4 %, 56,5 %, 56,6 %, 56,7 %, 56,8 %, 56,9 %, 57,0 %, 57,1 %, 57,2 %, 57,3 %, 57,4 %, 57,5 %, 57,6 %, 57,7 %, 57,8 %, 57,9 %, 58,0 %, 58,1 %, 58,2 %, 58,3 %, 58,4 %, 58,5 %, 58,6 %, 58,7 %, 58,8 %, 58,9 %, 59,0 %, 59,1 %, 59,2 %, 59,3 %, 59,4 %, 59,5 %, 59,6 %, 59,7 %, 59,8 %, 59,9 % oder 60,0 % beträgt. Besonders bevorzugt sind in den meisten Anwendungen 30 % bis 50 %. Das oder die Lotpulver können konventionell sein, beispielsweise D-15, DF-4b oder DF-3A. Mit Hilfe der erfindungsgemäßen Lotmischung können verschiedene Lötverfahren reproduzierbar und unter Vermeidung von Sprödphasen durchgeführt werden. Weitere Merkmale und deren Vorteile sind den Beschreibungen des vorhergehenden Erfindungsaspekts zu entnehmen.

In einer vorteilhaften Ausgestaltung der Erfindung ist vorgesehen, dass die Lotmischung in Massenprozent 5-15 % Binder enthält. Hierdurch kann die Lotmischung als eine Art Paste verarbeitet werden, wodurch eine verbesserte Haftung am Bauteil und eine zuverlässigere Verarbeitung möglich sind.

In einer weiteren vorteilhaften Ausgestaltung der Erfindung ist vorgesehen, dass das Lotpulver Bor enthält und/oder dass das Lotpulver zumindest im Wesentlichen frei von Ta ist, das heißt, dass Ta nicht oder nur als Verunreinigung vorkommt, und/oder dass das Lotpulver eine niedrigere Schmelztemperatur besitzt als der Superlegierungsfüllstoff. Dies führt, einzeln oder in beliebiger Kombination, zu einer verbesserten Gefügestruktur des Lots ohne die Ausbildung von Sprödphasen.

Ein dritter Aspekt der Erfindung betrifft ein Verfahren zum Löten eines Bauteils, welches eine Superlegierung als Grundwerkstoff aufweist, mittels einer Lotmischung gemäß dem zweiten Erfindungsaspekt. Das Verfahren umfasst erfindungsgemäß zumindest die Schritte Auftragen der Lotmischung auf eine zu lötende Stelle des Grundwerkstoffs des Bauteils, Erhitzen der Lotmischung bis zu einer zum Schmelzen der Lotmischung ausreichenden Temperatur, Senken der Temperatur auf eine Diffusionslöttemperatur, Halten der Diffusionslöttemperatur über einen vorbestimmten Zeitraum und Abkühlen des Bauteils. Hierdurch können unterschiedliche Bauteile und Bauteiltypen optimal gelötet werden, ohne dass es zu Sprödphasenbildungen kommt. Weitere Merkmale und deren Vorteile sind den Beschreibungen der vorhergehenden Erfindungsaspekte zu entnehmen.

In einer vorteilhaften Ausgestaltung der Erfindung ist vorgesehen, dass das Verfahren ausgewählt ist aus der Gruppe Hochtemperaturlöten, Diffusionslöten (TLPB) und Reparaturlöten und/oder dass das Bauteil ein Turbinenbauteil aus einer einkristallinen oder polykristallinen Nickelbasis- und/oder Cobaltbasis-Superlegierung ist und/oder dass das Bauteil ein Gussteil ist. Alternativ oder zusätzlich ist es vorgesehen, dass die Lotmischung auf maximal 1250 °C erhitzt wird und/oder dass die Diffusionslöttemperatur auf eine Temperatur eingestellt wird, die mindestens 100 °C unter einer γ'-Lösungstemperatur des Grundwerkstoffs des Bauteils liegt und/oder dass die Diffusionslöttemperatur zwischen 1050 °C und 1250 °C, insbesondere zwischen 1120 °C und 1180°C beträgt und/oder dass die Diffusionslöttemperatur über einen Zeitraum zwischen 10 Minuten und 24 Stunden gehalten wird. Hierdurch ist in Abhängigkeit des jeweiligen Bauteils bzw. Bauteiltyps eine optimale Verfahrensdurchführung ermöglicht. Das Verfahren wird vorzugsweise unter Vakuum durchgeführt, um unerwünschte Oxidationen zu vermeiden.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine schematische Schnittdarstellung eines Bauteils, welches einen Riss aufweist, der durch ein Reparaturlötverfahren ausgebessert wird; und
- Fig. 2: ein Temperatur-Zeit-Profil des Reparaturlötverfahrens.

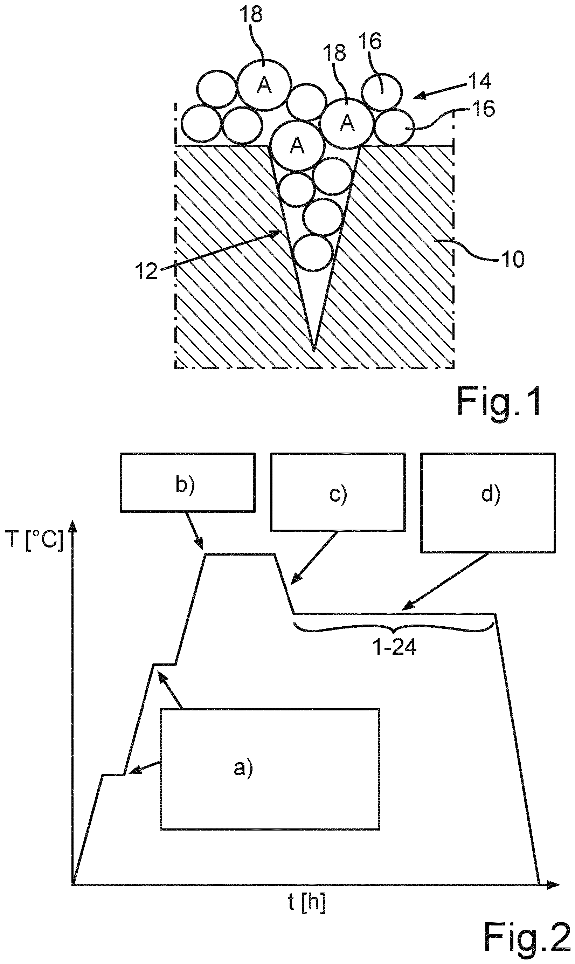

**Fig. 1** zeigt eine schematische Schnittdarstellung eines Bauteils 10, welches einen Riss 12 aufweist, der durch ein Reparaturlötverfahren ausgebessert wird. Fig. 1 wird im Folgenden in Zusammenschau mit **Fig. 2** erläutert, welche ein Temperatur-Zeit-Profil des Reparaturlötverfahrens zeigt. Man erkennt, dass in den Riss 12 des Bauteils 10, bei welchem es sich im vorliegenden Beispiel um ein Flugtriebwerksbauteil aus einer Nickelbasislegierung handelt, eine erfindungsgemäße Lotmischung 14 eingefüllt ist. Die Lotmischung 14 besteht aus einem konventionellen Lotpulver 16 auf Nickel- und/oder Cobaltbasis sowie in Massenprozent etwa 30-50 % eines Superlegierungsfüllstoffs 18, der als Additiv fungiert. Zusätzlich kann die Lotmischung 14 in manchen Varianten einen Binder (nicht gezeigt) aufweisen, der typischerweise einen Gewichtsanteil von 5-15 % besitzt, wobei generell auch mehr oder weniger Binder vorgesehen sein kann. Der Superlegierungsfüllstoff 18 besitzt einen höheren Schmelzpunkt als das Lotpulver 16 und kann daher auch als "High Melt" bezeichnet werden, während das Lotpulver 16 als "Low Melt" bezeichnet werden kann. Als Lotpulver 16 kann ein konventionelles Pulver wie D-15, DF-4b oder DF-3A verwendet werden. Auch andere Lotpulver 16 sind denkbar. Vorzugsweise enthält das Lotpulver 16 Bor.

Der Superlegierungsfüllstoff 18 umfasst in Massenprozenten generell etwa 10,0-11,0 % W, etwa 0,5-3,0 % Mo, etwa 5,0-8,0 % Ta, etwa 5,0-6,0 % Al, etwa 12,0-13,5 % Cr, etwa 0,01-4,0 % Co, etwa 0-1 % Hf und als Rest Ni sowie unvermeidbare Verunreinigungen. Der Superlegierungsfüllstoff 18 verzeichnet damit gleichzeitig relativ hohe Konzentrationen an Cr (min. ~12 Ma.-%) und an W (min. ~10 Ma.-%). Mo ist mit min. ~1 Ma.-% enthalten. Der Superlegierungsfüllstoff 18 ist weiterhin Gamma-Strich gehärtet und hat min. ~5 Ma.-% Al.

In einer ersten Ausführungsform besitzt der Superlegierungsfüllstoff 18 die in Tabelle 1 angegebene Zusammensetzung:

**Tabelle 1**

| Element | Additiv |
|---|---|
| Ni | Bal. |
| Co | 2 |
| Cr | 13 |
| Al | 6 |
| Ta | 7 |
| Mo | 2 |
| W | 10 |
| Hf | 0,5 |
| (Angaben in Ma.-%) | |

Weitere bevorzugte und HF-freie Ausführungsformen des Superlegierungsfüllstoffs 18 sind in Tabelle 2 angegeben:

**Tabelle 2**

| int. Bezeichnung | Ni | W | Mo | Ta | Al | Cr | Co |
|---|---|---|---|---|---|---|---|
| 2584 | Bal. | 10,00 | 1,00 | 8,00 | 6,00 | 13,50 | 3,00 |
| 3391 | Bal. | 10,00 | 2,00 | 6,00 | 6,00 | 13,50 | 0,00 |
| 3925 | Bal. | 10,00 | 2,00 | 8,00 | 6,00 | 13,00 | 0,00 |
| 4465 | Bal. | 10,00 | 3,00 | 5,00 | 6,00 | 13,00 | 0,00 |
| 4735 | Bal. | 10,00 | 3,00 | 6,00 | 6,00 | 13,00 | 0,00 |
| 11752 | Bal. | 11,00 | 2,00 | 7,00 | 6,00 | 12,50 | 3,00 |
| 12019 | Bal. | 11,00 | 2,00 | 8,00 | 6,00 | 12,50 | 0,00 |
| 12559 | Bal. | 11,00 | 3,00 | 5,00 | 6,00 | 12,50 | 0,00 |

Nach dem Verfüllen des Risses 12 mit der Lotmischung 14 wird das in Fig. 2 gezeigte Reparaturlötverfahren mit folgenden Parametern durchgeführt:
Schritt a): Aufheizen der Lotmischung 14 unter Berücksichtigung von etwaigen Haltezeiten, um Vakuum und Temperaturführung zu stabilisieren. Maximale Temperatur 1250 °C
Schritt b): Halten der Temperatur bis zum Aufschmelzen der Lotmischung 14;
Schritt c): Abkühlen auf eine Temperatur für das Diffusionslöten mit einer Diffusionswärmenachbehandlung. Temperaturfenster der Diffusionswärmenachbehandlung 1050 °C - 1250 °C. Optimales Temperaturfenster der Diffusionswärmenachbehandlung etwa 100 °C unter der Gamma-Strich-Lösungstemperatur des Grundwerkstoffes (üblicherweise 1120 °C -1180 °C); und
Schritt d): Halten der Temperatur für die erforderliche Dauer der Diffusionswärmenachbehandlung (ca. 1 - 24 Std.).

Nach dem Ende der Diffusionswärmenachbehandlung wird das Bauteil 10 dann wieder aktiv oder passiv auf Umgebungstemperatur abgekühlt.

Der Superlegierungsfüllstoff 18 hilft dabei, Sprödphasen zu vermeiden und die Reproduzierbarkeit des Lötverfahrens auch bei erneuten Reparaturen zu ermöglichen. Der Superlegierungsfüllstoff 18 liegt vorzugsweise als Pulver vor und wird mit dem Lot (Nickelbasis, borhaltig) vorzugsweise in Form einer Paste auf das zu reparierende Bauteil 10 appliziert. Nach dem Aufschmelzen des Lotes kann der Schmelzpunktsenker (Bor) in das Additiv 18 diffundieren. Durch die Steigerung des Aufnahmevermögens von Bor im Additiv 18 kann der Schmelze das Bor über Diffusionsvorgänge entzogen werden. Die Mikrostruktur wird durch die ausgelöste isotherme Erstarrung innerhalb des Reparaturlötzyklusses verbessert. Das Aufnahmevermögen für Bor ist im Superlegierungsfüllstoff 18 im Vergleich zu konventionellen Superlegierungen (auf Nickelbasis) signifikant gesteigert. Eine vollständige isotherme Erstarrung der Lotmischung 14 führt zu einem sprödphasenfreien Lötgefüge.

Die Steigerung des Aufnahmevermögens für Bor im Additiv 18 ist nicht durch eine Löslichkeitssteigerung bewirkt, sondern wird durch eine in situ Sekundärphasenbildung (in situ Boridbildung) hervorgerufen. In der Chemie des Additivs 18 sind insbesondere Legierungselemente vorgesehen und hinsichtlich ihres Anteils angepasst, die die Bildung von borhaltigen Phasen (Boride) verursachen. Mikrostrukturelle Merkmale von konventionellen Superlegierungen wurden in der Legierungsentwicklung zudem berücksichtigt, wodurch das neue Additiv 18 eine gamma-strich Härtung aufweist. Demgegenüber ist die Konzentration von boridbildenden Elementen (Cr, W, Mo) in konventionellen Superlegierungen beschränkt. Die Kombination boridbildender Elemente (wie Cr, Mo, W) wirken sich in hoher Konzentration in Verwendung als Grundwerkstoff aufgrund einer Mikrostrukturinstabilität gegenüber TCP-Phasen (Sprödphasen) negativ aus. Die Kenntnisse über die in situ Boridbildung wurden vorliegend erstmalig in einen Entwicklungsansatz überführt, um Synergien zwischen zwei Problemstellungen zu finden: Die Mikrostrukturinstabilität im Additiv durch hohe Cr-, Mo-, W- Anteile wird durch die Bildung von stabilen Boriden (z. B. MB, MB₂, M₂B, M₅B₃, M₃B₂ mit M = Cr, Mo, W) verbessert. Ohne die Interaktion von Bor im Additiv 18 ist eine Stabilisierung der Mikrostrukturstabilität gegenüber TCP-Phasen nicht gegeben, welches die Ursache darstellt, dass konventionelle Superlegierungen ein begrenztes Boridausscheidungspotential aufzeigen. Der Begriff "Boridausscheidungspotential" beschreibt dabei das Vermögen eines Materiales Boride bilden zu können. Je höher das Boridausscheidungspotential ist, umso größer ist die Menge an Boriden, die gebildet werden können.

### Bezugszeichenliste:

- 10: Bauteil
- 12: Riss
- 14: Lotmischung
- 16: Lotpulver
- 18: Superlegierungsfüllstoff/Additiv
- a) bis d): Verfahrensschritt

## Patentansprüche

1. Superlegierungsfüllstoff (18) zur Verwendung als Additiv in einem Lötverfahren, umfassend in Massenprozenten etwa 10,0-15,0 % W, etwa 0,5-3,0 % Mo, etwa 5,0-8,0 % Ta, etwa 5,0-7,0 % Al, etwa 12,0-20,0% Cr, etwa 0,01-4,0 % Co, etwa 0-2,0 % Hf und als Rest Ni sowie unvermeidbare Verunreinigungen.

2. Superlegierungsfüllstoff (18) nach Anspruch 1, welcher einzeln maximal 0,05 Gew.-%, in Summe maximal 0,15 Gew.-% unvermeidbare Verunreinigungen enthält.

3. Superlegierungsfüllstoff (18) nach Anspruch 1 oder 2, welcher zumindest im Wesentlichen frei von einem oder mehreren aus der Gruppe Y, Ti, Nb, Fe, C, Re, Si, Zr und B ist.

4. Superlegierungsfüllstoff (18) nach einem der Ansprüche 1 bis 3, bestehend in Massenprozenten aus 1,75 % Co, 13.25 % Cr, 6,0 % Al, 6,75 % Ta, 1,75 % Mo, 10,25 % W, 0,1 % Hf und als Rest Ni sowie maximal 0,2 %, insbesondere maximal 0,1 % unvermeidbaren Verunreinigungen.

5. Superlegierungsfüllstoff (18) nach einem der Ansprüche 1 bis 3, bestehend aus etwa 0,01-3,0 % Co, 12,5-13,5 % Cr, 5,5-6,0 % Al, 5,0-8,0 % Ta, 1,0-3,0 % Mo, 10,0-11,0 % W, und als Rest Ni sowie maximal 0,2 %, insbesondere maximal 0,1 % unvermeidbaren Verunreinigungen.

6. Lotmischung (14) zur Anwendung in einem Verfahren zum Löten eines Bauteils (10), insbesondere eines Flugtriebwerkbauteils, wobei die Lotmischung (14) wenigstens ein Lotpulver (16) auf Nickel- und/oder Cobaltbasis sowie in Massenprozent etwa 20-60 % des Superlegierungsfüllstoffs (18) nach einem der Ansprüche 1 bis 5 als Additiv umfasst.

7. Lotmischung (14) nach Anspruch 6, welche in Massenprozent 5-15 % Binder enthält.

8. Lotmischung (14) nach Anspruch 6 oder 7, wobei das Lotpulver (16) Bor enthält und/oder wobei das Lotpulver (16) zumindest im Wesentlichen frei von Ta ist und/oder wobei das Lotpulver (16) eine niedrigere Schmelztemperatur besitzt als der Superlegierungsfüllstoff (18).

9. Verfahren zum Löten eines Bauteils (10), welches eine Superlegierung als Grundwerkstoff aufweist, mittels einer Lotmischung (14) nach einem der Ansprüche 6 bis 8, umfassend zumindest die folgenden Schritte:
- Auftragen der Lotmischung (14) auf eine zu lötende Stelle des Grundwerkstoffs des Bauteils (10);
- Erhitzen der Lotmischung (14) bis zu einer zum Schmelzen der Lotmischung (14) ausreichenden Temperatur;
- Senken der Temperatur auf eine Diffusionslöttemperatur;
- Halten der Diffusionslöttemperatur über einen vorbestimmten Zeitraum; und
- Abkühlen des Bauteils (10).

10. Verfahren nach Anspruch 9, **dadurch gekennzeichnet, dass**
dieses ausgewählt ist aus der Gruppe Hochtemperaturlöten, Diffusionslöten (TLPB) und Reparaturlöten; und/oder
dass das Bauteil (10) ein Turbinenbauteil aus einer einkristallinen oder polykristallinen Nickelbasis- und/oder Cobaltbasis-Superlegierung ist; und/oder
dass das Bauteil (10) ein Gussteil ist; und/oder
dass die Lotmischung (14) auf maximal 1250 °C erhitzt wird; und/oder
dass die Diffusionslöttemperatur auf eine Temperatur eingestellt wird, die mindestens 100 °C unter einer γ'-Lösungstemperatur des Grundwerkstoffs des Bauteils liegt; und/oder dass die Diffusionslöttemperatur zwischen 1050 °C und 1250 °C, insbesondere zwischen 1120 °C und 1180°C beträgt; und/oder
dass die Diffusionslöttemperatur über einen Zeitraum zwischen 10 Minuten und 24 Stunden gehalten wird.
